Europäisches Patentamt

European Patent Office

Office européen des brevets

(11) Publication number: **0 148 410**
A1

# EUROPEAN PATENT APPLICATION

(21) Application number: 84114729.1

(22) Date of filing: 04.12.84

(51) Int. Cl.⁴: **G 01 T 1/29**

(30) Priority: 12.12.83 JP 234053/83

(43) Date of publication of application: 17.07.85
Bulletin 85/29

(84) Designated Contracting States: BE DE FR GB NL

(71) Applicant: FUJI PHOTO FILM CO., LTD., 210 Nakanuma
Minamiashigara-shi, Kanagawa-ken, 250-01 (JP)

(72) Inventor: Aagano, Toshitaka c/o Fuji Photo Film Co.,
Ltd., 798 Miyanodai Kaisei-machi, Ashigarakami-gun
Kanagawa-ken (JP)
Inventor: Watanabe, Hideo c/o Fuji Photo Film Co., Ltd.,
798 Miyanodai Kaisei-machi, Ashigarakami-gun
Kanagawa-ken (JP)
Inventor: Saotome, Shigeru c/o Fuji Photo Film Co., Ltd.,
798 Miyanodai Kaisei-machi, Ashigarakami-gun
Kanagawa-ken (JP)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath,
Maximilianstrasse 58, D-8000 München 22 (DE)

(54) Radiation image read-out apparatus.

(57) A radiation image read-out apparatus comprises a
main scanning means and a sub-scanning means for two
dimensionally scanning a stimulable phosphor sheet carrying a radiation image stored therein by stimulating rays
which cause the stimulable phosphor sheet to emit light in
proportion to the radiation energy stored, and a light guide
member for guiding the emitted light to a photodetector
which detects the light and converts it into an electric image
signal. Sharpness and graininess of the detected image are
adjusted by at least one of a beam diameter adjusting de-
vice, a light amount adjusting device, a main scanning
speed adjusting device, and a sub-scanning speed adjusting
device.

## BACKGROUND OF THE INVENTION

### Field of the Invention

This invention relates to an apparatus for reading out a radiation image stored in a stimulable phosphor sheet. This invention particularly relates to a radiation image read-out apparatus wherein sharpness and graininess of image read out are adjusted as desired.

### Description of the Prior Art

When certain kinds of phosphors are exposed to a radiation such as X-rays, $\alpha$-rays, $\beta$-rays, $\gamma$-rays, cathode rays or ultraviolet rays, they store a part of the energy of the radiation. Then, when the phosphor which has been exposed to the radiation is exposed to stimulating rays such as visible light, light is emitted by the phosphor in proportion to the stored energy of the radiation. A phosphor exhibiting such properties is referred to as a stimulable phosphor.

As disclosed in U.S. Patent Nos. 4,258,264, 4,276,473, 4,315,318 and 4,387,428, and Japanese Unexamined Patent Publication No. 56(1981)-11395, it has been proposed to use a stimulable phosphor in a radiation image recording and reproducing system. Specifically, a sheet provided with a layer of the stimulable phosphor (hereinafter referred to as a stimulable phosphor sheet or simply as a sheet) is first exposed to a radiation passing through an object to have a radiation image stored therein, and is then scanned with stimulating rays such as a laser beam which cause it to emit light in proportion to the radiation energy stored. The light

- 2 -

emitted by the stimulable phosphor sheet upon stimulation thereof is photoelectrically detected and converted to an electric image signal, which is processed as desired to reproduce a visible image having an improved quality, particularly a high diagnostic efficiency and accuracy.

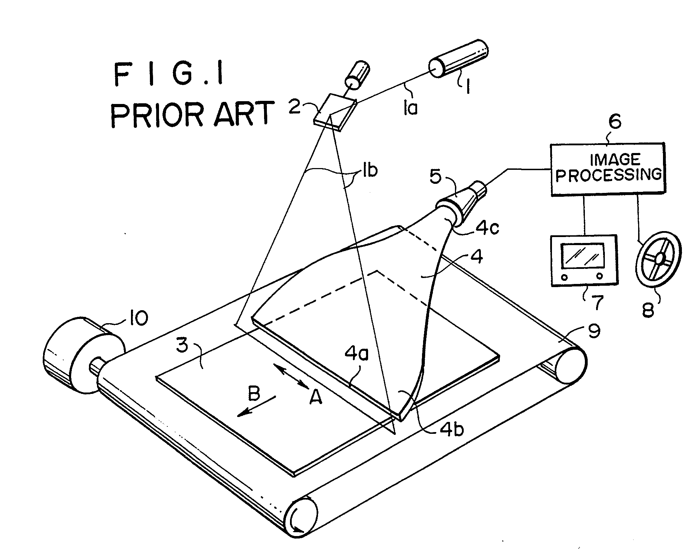

Figure 1 is a schematic view showing an example of a radiation image read-out apparatus employed for reading out a radiation image stored in a stimulable phosphor sheet in the aforesaid radiation image recording and reproducing system.

In the apparatus of Figure 1, a laser beam 1a of a predetermined intensity is emitted as stimulating rays by a laser beam source 1 to a galvanometer mirror 2. The laser beam 1a is deflected by the galvanometer mirror 2 to form a laser beam 1b impinging upon a stimulable phosphor sheet 3 positioned below the galvanometer mirror 2 so that the sheet 3 is scanned by the laser beam 1b in the main scanning direction, i.e. in the width direction of the sheet 3 as indicated by the arrow A. While the laser beam 1b impinges upon the stimulable phosphor sheet 3, the sheet 3 is conveyed in the sub-scanning direction as indicated by the arrow B, for example, by an endless belt device 9 driven by a motor 10. Therefore, scanning in the main scanning direction is repeated at an angle approximately normal to the sub-scanning direction, and the whole surface of the stimulable phosphor sheet 3 is two-dimensionally scanned by the laser beam 1b. As the stimulable phosphor sheet 3 is scanned by the laser beam 1b, the portion of the sheet 3 exposed to the laser beam 1b

emits light having an intensity proportional to the radiation energy stored. The light emitted by the stimulable phosphor sheet 3 enters a transparent light guide member 4 from its light input face 4a positioned close to the sheet 3 in parallel to the main scanning line. The light guide member 4 has a flat-shaped front end portion 4b positioned close to the stimulable phosphor sheet 3 and is shaped gradually into a cylindrical shape towards the rear end side to form an approximately cylindrical rear end portion 4c which is closely contacted with a photomultiplier 5. The light emitted by the stimulable phosphor sheet 3 upon stimulation thereof and entering the light guide member 4 from its light input face 4a is guided inside of the light guide member 4 up to the rear end portion 4c, and received by the photomultiplier 5. Thus the light emitted by the stimulable phosphor sheet 3 in proportion to the radiation energy stored therein is detected and converted into an electric image signal by the photomultiplier 5. The electric image signal thus obtained is sent to an image processing circuit 6 and processed therein. The electric image signal thus processed is then reproduced into a visible image and displayed, for example, on a CRT 7, or stored in a magnetic tape 8, or directly reproduced as a hard copy on a photographic material or the like.

When a radiation image of the human body is read out by use of the aforesaid radiation image read-out apparatus and is reproduced, image quality of high sharpness is required for an image of a bone ridge or the like, and image quality of

- 4 -

0148410

high graininess is required for an image of a soft portion such as the abdomen. In order to satisfy these two contradictory needs, a stimulable phosphor sheet adapted for obtaining image quality of high sharpness and a stimulable phosphor sheet adapted for obtaining image quality of high graininess have heretofore been selected and used in accordance with the portion of the human body whose image is to be recorded. However, it is very troublesome to select the stimulable phosphor sheet each time image recording is conducted. Further, it is practically impossible to select the stimulable phosphor sheet as described above in a built-in type radiation image recording and read-out apparatus wherein an image recording section and an image read-out section are fabricated integrally and the stimulable phosphor sheet is circulated and reused by repeating a step of erasing the radiation energy remaining in the sheet.

SUMMARY OF THE INVENTION

The primary object of the present invention is to provide a radiation image read-out apparatus wherein sharpness and graininess of a read-out image can be changed as desired even when the same stimulable phosphor sheet is used.

Another object of the present invention is to provide a radiation image read-out apparatus which is easy to operate and is applicable to all types of objects without changing the stimulable phosphor sheet.

The present invention has been made on the basis of the finding that, in the radiation image read-out apparatus

- 5 -

comprising the main scanning means, the sub-scanning means, the light guide member and the photodetector as described above, sharpness of the read-out image increases and graininess thereof decreases as the beam diameter of stimulating rays is made small and, on the other hand, graininess increases and sharpness decreases as the stimulating ray energy per unit area of the stimulable phosphor sheet is increased.  The radiation image read-out apparatus of the present invention is characterized by the provision of at least one adjusting means selected from the group consisting of a beam diameter adjusting means for adjusting the beam diameter of stimulating rays, a light amount adjusting means for adjusting the light amount of stimulating rays impinging upon the stimulable phosphor sheet, a main scanning speed adjusting means for adjusting the scanning speed in the main scanning direction, and a sub-scanning speed adjusting means for adjusting the scanning speed in the sub-scanning direction, so that sharpness and graininess of the read-out image can be changed even when the same stimulable phosphor sheet is used.  The stimulating ray energy per unit area of the stimulable phosphor sheet increases when the light amount of stimulating rays is increased by the light amount adjusting means, or when the scanning speed in the main scanning direction is decreased by the main scanning speed adjusting means, or when the scanning speed in the sub-scanning direction is decreased by the sub-scanning speed adjusting means.

In the present invention, since the image quality of the read-out image can be controlled as desired without changing the stimulable phosphor sheet, the apparatus is easy to operate and is applicable to all types of objects. Particularly, when the present invention is applied to the built-in type radiation image recording and read-out apparatus in which it is practically impossible to change the stimulable phosphor sheet, the function of the read-out apparatus is markedly improved.

In this specification, the expression "moving a stimulable phosphor sheet with respect to stimulating rays in the sub-scanning direction" should be understood to mean movement of the stimulable phosphor sheet relative to the stimulating rays and to include both the movement of the stimulable phosphor sheet with the stimulating rays standing still in the sub-scanning direction and the movement of stimulating rays in the sub-scanning direction with the sheet standing still.

BRIEF DESCRIPTION OF THE DRAWINGS

Figure 1 is a schematic view showing the conventional radiation image read-out apparatus,

Figure 2 is a schematic view showing an embodiment of the radiation image read-out apparatus in accordance with the present invention, and

Figure 3 is a schematic view showing an example of the beam diameter adjusting means used in the radiation image read-out apparatus of the present invention.

0148410

DESCRIPTION OF THE PREFERRED EMBODIMENTS

The present invention will hereinbelow be described in further detail with reference to the accompanying drawings.

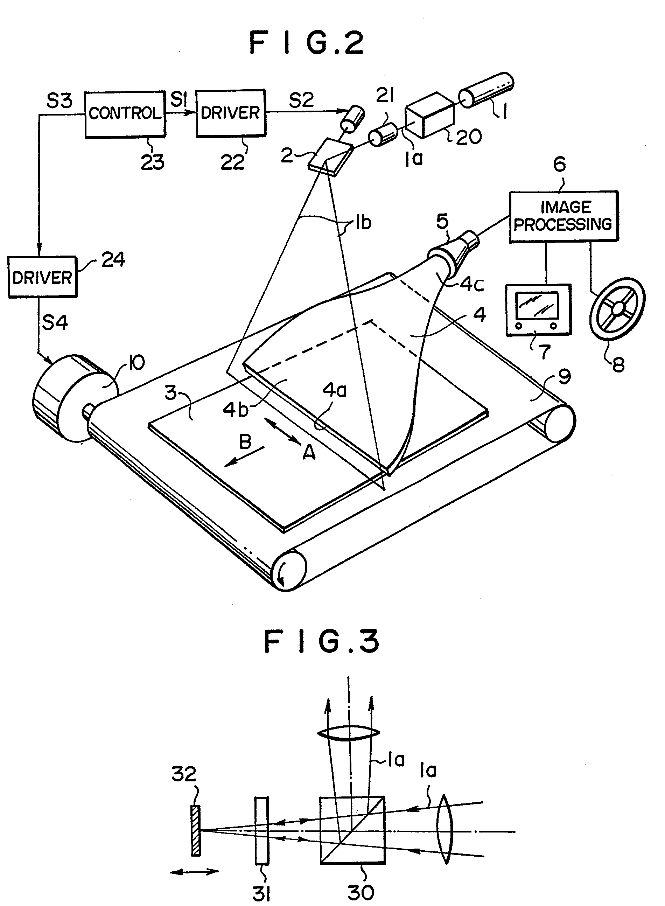

Figure 2 schematically shows an embodiment of the radiation image read-out apparatus in accordance with the present invention. In Figure 2, similar elements are numbered with the same reference numerals with respect to Figure 1.

The laser beam 1a emitted by the laser beam source 1 passes through a light amount adjusting means 20 and a beam diameter adjusting means 21 and impinges upon the galvanometer mirror 2. A control signal S1 for the galvanometer mirror period and a motor speed control signal S3 are respectively sent from a control circuit 23 for controlling the galvanometer mirror period and the motor speed to a driver 22 for the galvanometer mirror 2 and a driver 24 for the sub-scanning feed motor 10.

The light amount adjusting means 20 is constituted, for example, by a known acousto-optic modulator (AOM), an electro-optic modulator (EOM), or an ND filter, and controls the light amount of the laser beam 1b impinging upon the stimulable phosphor sheet 3. As the beam diameter adjusting means 21, it is possible to use, for example, a known zoom beam expander, a beam expander constructed so that a lens on the light output side is moved in the optical axis direction to change the beam diameter, or a system as shown in Figure 3 wherein a polarization beam splitter 30 and a mirror 32 are positioned with a quarter-wave plate 31

- 8 -

intervening therebetween and the mirror 32 is moved in the optical axis direction to change the focal length. In the case where the beam expander in which the lens is moved or the system in which the mirror is moved is used, the apparatus should preferably be constructed so that the beam diameter becomes minimum at the focusing point. As the beam diameter adjusting means 21, it is also possible to position several beam expanders for adjusting the beam diameter to different values so that they can be selectively aligned with the optical axis of the laser beam 1a, thereby changing the beam diameter by selectively using the beam expanders.

The driver 22 for the galvanometer mirror 2 changes a drive signal S2 on the basis of the control signal S1 for the galvanometer mirror period, thereby changing the period of the galvanometer mirror 2. When the period of the galvanometer mirror 2 is changed, the scanning speed of the laser beam 1b in the main scanning direction changes. The driver 24 for the sub-scanning feed motor 10 changes a drive signal S4 on the basis of the motor speed control signal S3, thereby changing the speed of the motor 10. When the speed of the motor 10 is changed, the scanning speed of the laser beam 1b in the sub-scanning direction changes.

Operations and effects of the aforesaid embodiment will be described hereinbelow. When a radiation image required to exhibit image quality of high sharpness, such as an image of a bone ridge of the human body, is read out, at least one of the following operations is conducted: 1) the beam diameter of the laser beam lb is decreased by the beam diameter adjusting means 21, 2) the light amount of the laser beam lb is decreased by the light amount adjusting means 20, 3) the scanning speed of the laser beam lb in the main scanning direction is increased by decreasing the period of the galvanometer mirror 2 by the control circuit 23, and 4) the scanning speed of the laser beam lb in the sub-scanning direction is increased by increasing the speed of the motor 10 by the control circuit 23. As described above, sharpness of the read-out image is improved when the beam diameter of the laser beam lb is decreased. When the light amount of the laser beam lb is decreased or the scanning speed in the main scanning direction or in the sub-scanning direction is increased, energy of the laser beam lb per unit area of the stimulable phosphor sheet 3 decreases, and sharpness of the read-out image is improved.

When a radiation image required to exhibit image quality of high graininess, such as an image of the abdomen of the human body, is read out, at least one operation reverse to those described above is conducted. When the beam diameter of the laser beam lb becomes large, graininess of the read-out image is improved. When the light amount of the laser beam lb is increased or the scanning speed in the main scanning direction or in the sub-scanning direction is decreased, energy of the laser beam lb per unit area of the stimulable phosphor sheet 3 increases, and graininess of the read-out image is improved.

In the radiation image read-out apparatus of the present invention adapted for adjustment of sharpness and graininess of the read-out image, it is advantageous that a moderate stimulable phosphor sheet exhibiting image quality of somewhat high sharpness and somewhat good graininess be used as the stimulable phosphor sheet 3.

The aforesaid embodiment is provided with the light amount adjusting means 20, the beam diameter adjusting means 21, the main scanning speed adjusting means (control circuit 23), and the sub-scanning speed adjusting means (control circuit 23). However, not all of these means need necessarily be provided. By providing the apparatus with at least one of these means, the same operations and effects as those described above are accomplished. However, the apparatus should preferably be provided with as many adjustment means as possible since the possible range of image quality control becomes wider. The apparatus should most preferably be provided with all of the four adjusting means as described above. In the aforesaid embodiment, the control circuit 23 is used to control both galvanometer mirror period and motor speed, i.e. it is used as the main scanning speed adjusting means and as the sub-scanning speed adjusting means. However, a control circuit for the galvanometer mirror period and a control circuit for the motor speed may, of course, be provided independently.

- 1 -

## C L A I M S

1. A radiation image read-out apparatus comprising:

i) a main scanning means for scanning a stimulable phosphor sheet carrying a radiation image stored therein by stimulating rays in a main scanning direction,

ii) a sub-scanning means for moving said stimulable phosphor sheet with respect to said stimulating rays in a sub-scanning direction approximately normal to the main scanning direction,

iii) a light guide member having a light input face extending in the main scanning direction close to a scanning line in the main scanning direction, said light guide member guiding the light entering from said light input face up to a light output face thereof,

iv) a photodetector connected with said light output face of said light guide member, and

v) at least one adjusting means selected from the group consisting of a beam diameter adjusting means for adjusting the beam diameter of said stimulating rays, a light amount adjusting means for adjusting the light amount of said stimulating rays impinging upon said stimulable phosphor sheet, a main scanning speed adjusting means for adjusting the scanning speed in the main scanning direction, and a sub-scanning speed adjusting means for adjusting the scanning speed in the sub-scanning direction.

2. An apparatus as defined in Claim 1 wherein said beam diameter adjusting means comprises a zoom beam expander.

3. An apparatus as defined in Claim 1 wherein said beam diameter adjusting means comprises a beam expander constructed so that a lens on the light output side is moved in the optical axis direction to change the beam diameter of said stimulating rays.

4. An apparatus as defined in Claim 1 wherein said beam diameter adjusting means comprises a polarization beam splitter, a quarter-wave plate, and a mirror positioned so that said quarter-wave plate intervenes between said polarization beam splitter and said mirror, and said mirror is moved in the optical axis direction to change the beam diameter of said stimulating rays.

5. An apparatus as defined in Claim 1 wherein said beam diameter adjusting means comprises a plurality of beam expanders for adjusting the beam diameter of said stimulating rays to different values, said beam expanders being positioned so that one of said beam expanders is selectively aligned with the optical axis of said stimulating rays.

6. An apparatus as defined in Claim 1 wherein said light amount adjusting means comprises an acousto-optic modulator.

7. An apparatus as defined in Claim 1 wherein said light amount adjusting means comprises an electro-optic modulator.

8. An apparatus as defined in Claim 1 wherein said light amount adjusting means comprises an ND filter.

9. An apparatus as defined in Claim 1 wherein said stimulating rays are a laser beam.

0148410

FIG.I
PRIOR ART

IMAGE PROCESSING

# F I G.2

# F I G.3

0148410

European Patent Office

**EUROPEAN SEARCH REPORT**

Application number

EP 84 11 4729

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 084 622 (FUJI PHOTO FILM CO. LTD.)<br>* Page 17, line 11 - page 19, line 3 and line 6 - page 21, line 25; page 25, lines 13-16; figure 2 * | 1,3,9 | G 01 T 1/29 |
| | --- | | |
| A | US-A-4 346 406 (KATO & ISHIDA)<br>* Column 1, line 65 - column 3, line 10; column 5, lines 9-27; figure 3 * | 1,6,9 | |
| | --- | | |
| X | EP-A-0 077 677 (FUJI PHOTO FILM CO. LTD.)<br>* Page 5, line 11 - page 6, line 8; page 7, lines 10-17; page 12, line 27 - page 13, line 12; page 14, lines 9-15; page 20, line 1 - page 21, line 6; page 23, line 20 - page 24, line 24; figures 1,2,4,5 * | 1,3,5 8,9 | TECHNICAL FIELDS SEARCHED (Int. Cl.4)<br><br>G 01 T<br>H 04 N |
| | ----- | | |

The present search report has been drawn up for all claims

| Place of search | Date of completion of the search | Examiner |
|---|---|---|
| THE HAGUE | 22-03-1985 | DATTA S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82